Europäisches Patentamt

European Patent Office

Office européen des brevets

(11) Publication number: **0 199 727**
**B1**

(12) **EUROPEAN PATENT SPECIFICATION**

(45) Date of publication of patent specification: **27.09.89**

(21) Application number: **85900507.6**

(22) Date of filing: **19.12.84**

(86) International application number:
**PCT/SE84/00435**

(87) International publication number:
**WO 85/03607 15.08.85 Gazette 85/18**

(51) Int. Cl.⁴: **H 04 B 3/46,** H 04 B 3/23,
H 04 L 1/24

(54) METHOD TO TEST THE FUNCTION OF AN ADAPTIVE ECHO CANCELLER.

(30) Priority: **01.02.84 SE 8400502**

(43) Date of publication of application:
**05.11.86 Bulletin 86/45**

(45) Publication of the grant of the patent:
**27.09.89 Bulletin 89/39**

(84) Designated Contracting States:
**BE CH DE GB LI NL**

(56) References cited:
**EP-A-0 014 505**
**GB-B-1 316 791**
**SE-B- 426 764**

(73) Proprietor: **TELEFONAKTIEBOLAGET L M
ERICSSON**
**S-126 25 Stockholm (SE)**

(72) Inventor: **DAHLQVIST, Ingemar, Erik
Emagatan 18
S-121 57 Johanneshov (SE)**

(74) Representative: **Johnsson, Helge et al
Telefonaktiebolaget L M Ericsson
S-126 25 Stockholm (SE)**

Courier Press, Leamington Spa, England.

## Description

### Technical field

The present invention relates to a method of testing an apparatus for adaptive echo cancellation. Such an apparatus is included in a transmission equipment for digital communication.

### Background art

An apparatus for adaptive echo cancellation of the kind mentioned above is previously described in the SE—B—426.764. As described in this patent, echo cancellation of such as an incoming analogue signal takes place by correction signals from an adaptive balance filter being added to the signal, the parameters of the balance filter being continuously or stepwise updated from a correction unit. In this apparatus a correction of the balance filter parameters is carried out by applying a send signal to the send side of the apparatus for transmission via a two-wire to four-wire hybrid to a remote end. The received signal contains a remote signal and a leak signal, the latter originating from the send signal. The balance filter delivers a correction signal to compensate for the leak signal through the hybrid. The receiver contains a variable reference level to be compared with the compensated signal and the level is varied in dependence on an estimated value of the remote signal. The filter parameters are updated and corrected in dependence on a correlation between the estimated value of the remote signal and the send signal. By this the filter parameters can be updated as if the remote signal has been disconnected.

Thus in the apparatus according to SE—B—426.764 a variable reference level is compared with a resulting signal containing the remote signal in order to have an updating of the balance filter coefficients which as little as possible is dependent on the remote signal.

A usual method of functionally controlling digital equipment is to loop circuit the data flow from transmitter to receiver and carry out a bit error measurement. In this way the transmitter, receiver and four-wire to two-wire junction of the echo cancellation apparatus can be functionally controlled.

### Disclosure of invention

Verification of the function of the echo canceller included in the apparatus involves certain problems, since a measuring signal must be supplied to the two-wire side of the apparatus in such a case. This means that an access relay must be connected to the two-wire before the hybrid circuit for supplying the measuring signal to the echo canceller. The measuring signal must be line coded in the way performed in the send units of the apparatus with the object of simulating the remote signal. Finally, the echo is changed when the line is interrupted which makes it theoretically possible for the echo from the measuring equipment to be inhibited, but not the echo from the line.

In the above mentioned apparatus of the prior art, it is of importance to establish the correction unit and the digital balance filter fulfil their functions within given error margins. This means that the balance filter shall supply correction values to the summator, which adds the correction values to incoming signals so that the value of the residue echo falls below a given limit. If the incoming signal is sampled and the correction signal consists of digital values at the addition, these values should be correct within given intervals. Incorrect values for the correction signals give poorer echo cancelling and can thus give rise to incorrect reception. As examples of causes may be mentioned; false supply values to the balance filter, deficient synchronism and fault in the memory cell structure of the balance filter, e.g. a faulty ROM in the store unit.

The object with the present invention is to provide a method of testing the function of an adaptive echo canceller without using an access relay on the line side.

The method is characterized as will be apparent from the appended claims.

### Brief description of drawings

The invention will now be described in detail with reference to the accompanying drawings, wherein:

Figure 1 is a block diagram of an apparatus for adaptive echo cancellation, in which the inventive method is utilized, and

Figure 2 is a diagram of some signals which occur in the apparatus according to Figure 1.

### Best modes for carrying out the invention

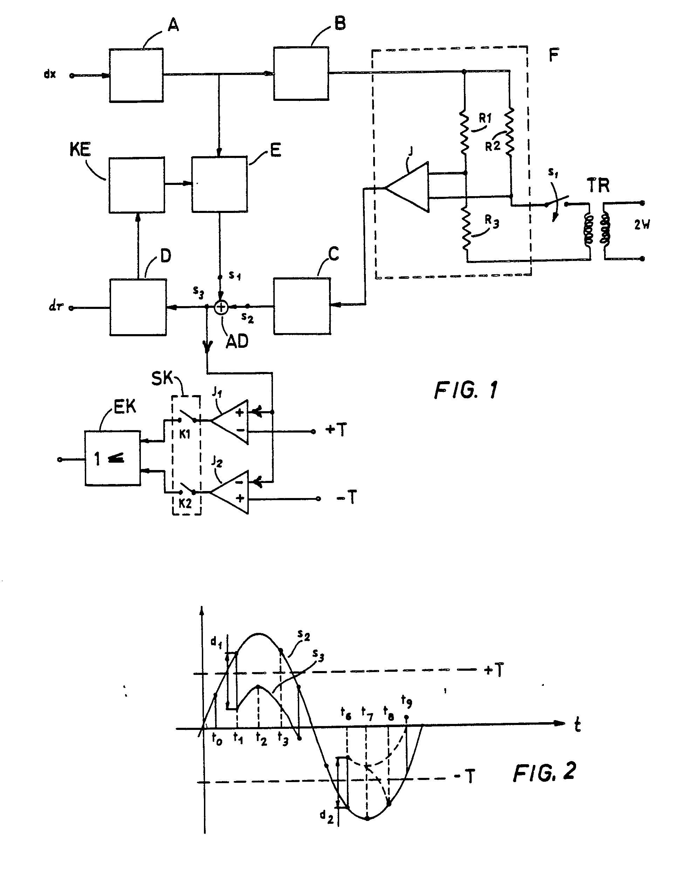

An apparatus for adaptive echo cancellation is illustrated in the block diagram of Figure 1, together with a circuit for carrying out the method in accordance with the invention.

On the send side, the apparatus includes a send unit A for data with a coding unit B connected to the output of the send unit A for recording send data to a suitable line code, e.g. biphase code. The output of the coding unit B is connected to a two-wire to four-wire hybrid F, here exemplified as a voltage bridge including the resistors R1, R2 and R3 as well as an operational amplifier J.

In one of the two-wire paths a switch S1 is connected to one terminal of a line transformer TR.

In the reception path of the apparatus there is a filter circuit (a lowpass filter) C with its input connected to the output of the amplifier J for receiving and filtering the incoming line signal from the two-wire line. The output of the filter C is connected to a summator AD and further to a receiver detector D.

The block E constitutes an adaptive echo canceller connected between the send and receive paths and to a summator AD. The echo canceller E conventionally sends a correction signal $s_1$ to the received and filtered signal $s_2$, a signal $s_3$ being obtained, which is free from echo, as far as possible. A correction unit KE is conventionally connected between the detector D and the echo canceller E for adjusting the filter parameters in the balance filter included in the echo canceller E in dependence on the received and detected signal $s_3$.

The plus input of a first and a second comparator J1 and J2 may be connected to the output of the summator AD. The minus input of one comparator J1 is connected to a first threshold voltage $+T$ and the plus input of the other comparator J2 is connected to a second threshold voltage $-T$. Each output of the comparators J1 and J2 is connected to a contact K1 and K2, respectively, included in a sampling circuit SK. The contacts K1 and K2 are controlled such that sampling of the output signal from the respective comparator is done in the same way as for the received signal $s_3$ in the block D, i.e. synchronous with the sampling rate in block D. An OR-circuit EK is connected to the output of the sampling circuit SK.

When testing the echo canceller function according to the inventive method, the echo canceller E is connected in the normal way and the contact S1 is closed. The remote end transmitter is shut out so that no line signal occurs over the two-wire 2W, apart from the one generated by the local sender (block A). A random bit flow, i.e. a bit flow in which "ones" and "zeros" occur randomly, is applied to the input dx of the data sender A. This bit flow is transferred via the units B, F, and C to the input of the summator AD where it occurs as a signal $s_2$, and also to the echo canceller E which gives a compensation signal $s_1$, and for perfect echo cancellation $s_1 = -s_2$.

The signal $s_3$ on the output of the summator AD gives the echo signal which has not been cancelled. This signal is taken to the inputs of both comparators J1 and J2 and is compared with the threshold values $+T$ and $-T$. If this signal $s_3$ is positive then the comparison with $+T$ is of interest, while the comparison with the threshold value $-T$ is of interest if $s_3$ is negative. After sampling in the circuit SK, there is obtained a "one" pulse or no pulse a "zero" on the output of the OR circuit EK according to the following conditions at the sampling instants:

If $s_3 > +T$, a "one" ($s_3 > 0$) is obtained
$-T < s_3 < +T$, a "zero" ($s_3 \gtreqless 0$) is obtained, and
$s_3 < -T$, a "one" ($s_3 < 0$) is obtained.

The threshold values $+T$, $-T$ have a value selected such that the lowest expected remote signal can be detected even if the residue echo has such a value of the amplitude.

The compared signals are sampled in the same way as a received remote signal, (e.g. 4 times/bit). An error signal v is obtained from the output of the OR circuit EK and consists of a pulse each time the echo canceller E cannot cancel the echo (the signal $s_2$ in its entirety) to a value less than $/T/$. The signal v, which is thus "zero" when the compensative signal $s_3$ is less than $/T/$ and "one" when $/s_3/ > /T/$ can be utilized and evaluated. A quality limit is suitably set for the echo canceller E, measured in the number of error pulses ("ones") per second.

It is also conceivable to carry out the measurement of the compensated signal $s_3$ with the contact S1 open or with a nominal load connected to this contact. Noise disturbances thus disappear from the line, but the echo characteristic is simultaneously changed.

Figure 2 illustrates both signals $s_2$ and $s_3$ in Figure 1, and the action of a given compensation from the echo canceller E. The filtered signal $s_2$ is here assumed to be essentially sinusoidal and is sampled at the instants $t_0, t_1, t_2, t_3, \ldots t_6, t_7, t_8, t_9$, the echo canceller here sending at these instants a digital signal level $s_1$ for the compensation. For example, at $t_1$ there is sent a level $-d_1$ from the echo canceller E to the summator AD, which lowers the level of $s_2$ so that the signal $s_3$ will come below the threshold $+T$. This is assumed to take place at the instant $t_3$ also. In a similar way, a compensation with $+d_2$ takes place at the sampling instants $t_6, t_7$ so that the level of the signal $s_3$ comes above the threshold $-T$. At the instant $t_8$ the compensation is assumed to lapse due to possible errors in such as one of the stored units in the echo canceller E, resulting in that the value of $s_3$ becomes lower than $-T$. Correct compensation takes place once again at the instant $t_9$. If the error returns a given number of times during a given time interval, e.g. during one second, this can be detected and measures taken. For example, the error may be due to a cell being faulty in the store unit. If the store unit is then addressed by a 7-bit word the error will occur on an average for every 128th sample.

With the inventive method, the remote signal is thus disconnected and it is a condition that the signal received from the local send side shall be lower than a given absolute level $/T/$ for the echo cancelltion to be acceptable.

## Claims

1. method of testing the function of an apparatus for adaptive echo cancellation included in a transmission equipment for data communication, in which a send signal is applied to the send side (A, B) of the apparatus for transmission via a two-wire to four-wire hybrid (F) to a remote end, said test signal giving rise to a correction signal ($s_1$) on the receiver side (C, D) of the apparatus for correction of the signal ($s_2$) received from the hybrid (F), and a remote signal appearing on the two-wire side of said hybrid (F), said correction signal ($s_1$) compensating the received signal ($s_2$) originating from the applied test signal, characterized in that said remote signal is disconnected and that the compensated signal ($s_3$) thus obtained is compared during a given time interval with at least one threshold value ($+T$ or $-T$), which is kept constant throughout said given time interval, the level of said threshold being chosen so that the lowest expected remote signal can be detected, a quality limit for the compensated

signal ($s_3$) being determined such that the part of the compensated signal ($s_3$) which is greater or less than said threshold value during said given time interval is determined.

2. Method according to Claim 1, characterized in that said compensation signal ($s_3$) is compared with two threshold values (+T, −T) of opposite polarity.

3. Method as claimed in Claim 1 or 2, characterized in that said quality limit is determined such that the signal obtained after comparison with a threshold value during said time interval is sampled and the number of signal samples thus obtained which exceed or fall below said threshold value (+T, −T) during said given time interval are determined.

## Patentansprüche

1. Verfahren zum Prüfen der Funktion einer Vorrichtung zur adaptiven Echokompensation, die in einer Übermittlungsanlage zur Datenübertragung vorhanden ist, bei welchem ein Sendesignal der Sendeseite (A, B) der Vorrichtung zwecks Übertragung über eine Zwei-Draht- bis Vier-Draht-Gabelschaltung (F) zu einer Gegenstation zugeführt wird, das Prüfsignal ein Korrektursignal ($s_1$) an der Empfängerseite (C, D) der Vorrichtung zwecks Korrektur des von der Gabelschaltung (F) erhaltenen Signals ($s_2$) veranlasst, und ein Gegensignal an der Zwei-Draht-Seite der Gabelschaltung (F) erscheint, und das Korrektursignal ($s_1$) das empfangene Signal ($s_2$) kompensiert, das aus dem zugeführten Prüfsignal entsteht, dadurch gekennzeichnet, dass das Gegensignal abgetrennt und das somit erhaltene kompensierte Signal ($s_3$) während einer gegebenen Zeitspanne mit mindestens einem Schwellenwert (+T oder −T) verglichen wird, der während der gegebenen Zeitspanne konstant gehalten wird, der Pegel des Schwellenwertes derart gewählt ist, dass das kleinste erwartete Gegensignal erfasst werden kann, und ein Beschaffenheitsgrenzwert für das kompensierte Signal ($s_3$) derart bestimmt wird, dass der Teil des kompensierten Signals ($s_3$) bestimmt wird, der grösser oder geringer als der Schwellenwert während der gegebenen Zeitspanne ist.

2. Verfahren nach Anspruch 1, dadurch gekennzeichnet, dass das Kompensationssignal ($s_3$) mit zwei Schwellenwerten (+T, −T) entgegengesetzter Polarität verglichen wird.

3. Verfahren nach Anspruch 1 oder 2, dadurch gekennzeichnet, dass der Beschaffenheitsgrenzwert derart bestimmt wird, dass das Signal, das nach dem Vergleich mit einem Schwellenwert Während der genannten Zeitspanne erhalten wird, abgefragt wird, und dass die Anzahl der auf diese Weise erhaltenen Signalabfragen, die den Schwellenwert (+T, −T) während der gegebenen Zeitspanne überschreiten der unterschreiten, bestimmt wird.

## Revendications

1. Procédé pour essayer le fonctionnement d'un appareil pour la suppression adaptative de l'écho dans un équipement de transmission pour la communication de données, dans lequel un signal d'envoi est appliqué au côté envoi (A, B) de l'appareil pour la transmission par un hybride (F) à une extrémité éloignée, ce signal d'envoi donnant naissance à un signal de correction ($s_1$) du côté récepteur (C, D) de l'appareil pour la correction du signal ($s_2$) reçu de l'hybride (F), et un signal éloigné apparaissant sur le côté deux fils de l'hybride (F), ce signal de correction ($s_1$) compensant le signal ($s_2$) reçu provenant du signal d'essai appliqué, caractérisé en ce que le signal éloigné est débranché et en ce que le signal compensé ($s_3$) ainsi obtenu est comparé pendant un intervalle de temps donné à au moins une valeur de seuil (+T ou −T) qui est maintenue constante pendant tout ledit intervalle de temps donné, le niveau du seuil étant choisi en sorte que le signal éloigné attendu le plus faible puisse être détecté, une limite de qualité pour le signal compensé ($s_3$) étant déterminée telle que la partie du signal compensé ($s_3$) qui est supérieure ou inférieure à ladite valeur de seuil pendant l'intervalle de temps donné soit déterminée.

2. Procédé suivant la revendication 1, caractérisé en ce que le signal de compansation ($s_3$) est comparé aux valeurs de seuil (+T, −T) de polarité opposée.

3. Procédé suivant la revendication 1 ou la revendication 2, caractérisé en ce que la limite de qualité est déterminée telle que le signal obtenu après comparaison avec une valeur de seuil pendant ledit intervalle de temps est échantillonné, et que le nombre des échantillons de signal ainsi obtenu, qui est supérieure ou inférieur à la valeur de seuil (+T, −T) pendant l'intervalle de temps donné, soit déterminé.

*FIG. 1*

*FIG. 2*